(19) Europäisches Patentamt
European Patent Office
Office européen des brevets

(11) **EP 3 474 056 B1**

(12) **EUROPEAN PATENT SPECIFICATION**

(45) Date of publication and mention
of the grant of the patent:
**10.07.2024 Bulletin 2024/28**

(21) Application number: **16914206.4**

(22) Date of filing: **25.08.2016**

(51) International Patent Classification (IPC):
**G02B 13/00** (2006.01)    **G02B 7/02** (2021.01)
**G02B 27/00** (2006.01)    **G02B 13/06** (2006.01)

(52) Cooperative Patent Classification (CPC):
**G02B 7/02; G02B 27/0025; G02B 7/021;
G02B 13/00; G02B 13/06**

(86) International application number:
**PCT/JP2016/074822**

(87) International publication number:
**WO 2018/037532 (01.03.2018 Gazette 2018/09)**

(54) **LENS BARREL**

OBJEKTIVTUBUS

BARILLET D'OBJECTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.04.2019 Bulletin 2019/17**

(73) Proprietor: **Mitsubishi Electric Corporation
Chiyoda-ku
Tokyo 100-8310 (JP)**

(72) Inventors:
• **TSUJI, Hidenobu
  Tokyo 100-8310 (JP)**
• **KAMEYAMA, Shumpei
  Tokyo 100-8310 (JP)**
• **TAMAGAWA, Yasuhisa
  Tokyo 100-8310 (JP)**

(74) Representative: **Plasseraud IP
66, rue de la Chaussée d'Antin
75440 Paris Cedex 09 (FR)**

(56) References cited:
WO-A1-2014/204998    JP-A- 2009 223 251
JP-A- 2013 025 202    JP-A- 2013 025 202
JP-A- 2014 077 904    JP-A- H0 886 958
JP-A- H01 261 615    JP-A- H02 114 222
JP-A- H10 186 227    US-A1- 2005 030 408
US-A1- 2015 358 516

**Description**

TECHNICAL FIELD

The present invention relates to a lens barrel that images incident light onto an image surface.

BACKGROUND ART

There is a case in which a lens barrel is used as an optical antenna of a wind measurement lidar that measures a wind direction and a wind velocity in the atmosphere by transmitting and receiving laser light.

A variation may be caused in the performance of a lens barrel after assembly due to the erection tolerance.

In a lens barrel disclosed in Patent Literature 1 mentioned later, in order to suppress the erection tolerance, a flat surface is formed on each of end facets of two lenses held in the barrel while each of lens holding surfaces of the barrel for holding the two lenses is formed into the flat surface, and the two lenses are fixed in a state in which the end facets of the two lenses are pressed against the lens holding surfaces of the barrel.

Out of the two lenses, a first lens is a biconvex one in which both surfaces thereof are convex, and a second lens is a meniscus one in which a surface on an incidence side thereof is convex and a surface on an emission side thereof is concave.

CITATION LIST

PATENT LITERATURE

Patent Literature 1: Japanese Unexamined Patent Application Publication No. 2014-77904. Further prior art can be found in JP 2013 025202 A. The document discloses an imaging lens that has a solid-state image sensor whose imaging surface is curved in an arbitrary cross sections, so that the curved surface fall down on an object side toward a screen periphery portion. A maximum image height of the imaging surface is larger than 5 mm. An aperture stop (S) is positioned between the third and fourth lens groups (L3,L4).

SUMMARY OF INVENTION

TECHNICAL PROBLEM

Because the conventional lens barrel is structured as above, the erection tolerance can be suppressed, but, in a case in which the lens barrel is used as an optical antenna of a wind measurement lidar, the wavefront aberration required for the wind measurement lidar may be unable to be satisfied because the number of lenses held in the barrel is only two. In order to improve the performance of the wavefront aberration, it is necessary to increase the number of lenses held in the barrel, and the wavefront aberration required for a wind measurement lidar can be satisfied if the number of lenses held in the barrel is four. However, there is a problem in that it is troublesome to process the surfaces of a biconvex lens and a meniscus lens, and the structure of holding four lenses including a biconvex lens and a meniscus lens causes an increase in the manufacturing cost.

The present invention is made in order to solve the above-mentioned problem, and it is therefore an object of the present invention to provide a low-cost lens barrel that can satisfy the wavefront aberration required for a wind measurement lidar.

SOLUTION TO PROBLEM

According to the present invention, there is provided a lens barrel as defined in claim 1, including: a first lens in which a surface on a light incidence side thereof is convex and a surface on a light emission side thereof is flat; a second lens having negative refracting power on which light emitting from the first lens is incident; a third lens having negative refracting power on which light emitting from the second lens is incident; a fourth lens in which a surface on a light incidence side thereof is flat and a surface on a light emission side thereof is convex, and on which light emitting from the third lens is incident; and a barrel for holding the first through fourth lenses, in which a result of dividing a radius of curvature of an image surface where light is imaged by the first through fourth lenses by a focal length of a whole of the barrel comprised of the first through fourth lenses ranges from -2.36 to -2.14.

ADVANTAGEOUS EFFECTS OF INVENTION

According to the present invention, because one of the surfaces of each of the first through fourth lenses is flat, the manufacturing costs of the first through fourth lenses are reduced. Therefore, there is provided an advantage of providing a low-cost lens barrel that can satisfy the wavefront aberration required for a wind measurement lidar.

BRIEF DESCRIPTION OF DRAWINGS

Fig. 1 is a schematic diagram showing a lens barrel according to Embodiment 1 of the present invention;
Fig. 2 is an enlarged view showing a biconcave lens 2 and a meniscus lens 3 of the lens barrel according to Embodiment 1 of present invention;
Fig. 3 is a table diagram showing an example of lens barrel specifications, such as the radii of curvature of surfaces of a plano-convex lens 1, the biconcave lens 2, the meniscus lens 3, and a plano-convex lens 4, and an image surface $S_i$;
Fig. 4 is a schematic diagram showing a lens barrel according to Embodiment 2 of the present invention;
Fig. 5 is a table diagram showing an example of lens barrel specifications, such as the radii of curvature of surfaces of a plano-convex lens 1, a plano-concave lens 2', a meniscus lens 3, and a plano-convex lens 4, and the radius of curvature of an image surface $S_i$;
Fig. 6 is a schematic diagram showing a lens barrel according to Embodiment 3 of the present invention; and
Fig. 7 is a table diagram showing an example of lens barrel specifications, such as the radii of curvature of surfaces of a plano-convex lens 1, a plano-concave lens 2', a plano-concave lens 3', and a plano-convex lens 4, and the radius of curvature of an image surface $S_i$.

DESCRIPTION OF EMBODIMENTS

Hereafter, in order to explain this invention in greater detail, the embodiments of the present invention will be described with reference to the accompanying drawings.

Embodiment 1.

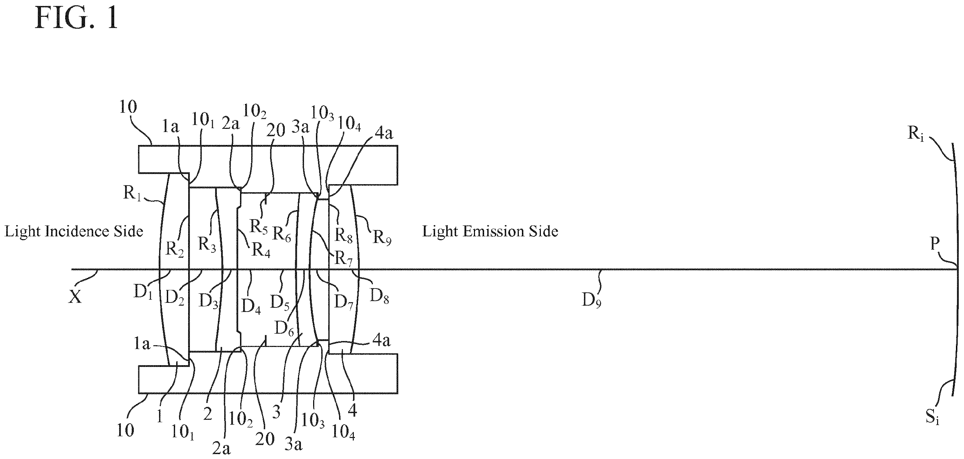

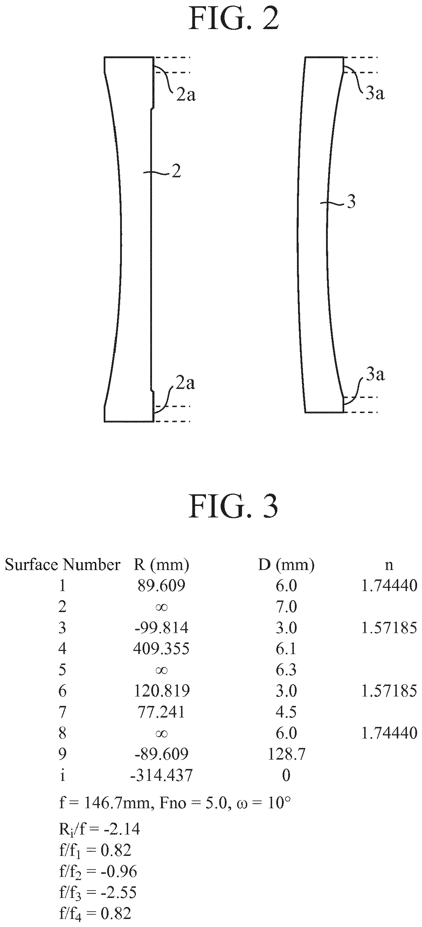

Fig. 1 is a schematic diagram showing a lens barrel according to Embodiment 1 of the present invention, and Fig. 2 is an enlarged view showing a biconcave lens 2 and a meniscus lens 3 of the lens barrel according to Embodiment 1 of the present invention.
In Figs. 1 and 2, the barrel 10 is a lens holding member holding a plano-convex lens 1 (first lens), the biconcave lens 2 (second lens), the meniscus lens 3 (third lens), and a plano-convex lens 4 (fourth lens), and has, as flat lens holding surfaces, a lens holding surface $10_1$ (first lens holding surface), a lens holding surface $10_2$ (second lens holding surface), a lens holding surface $10_3$ (third lens holding surface), and a lens holding surface $10_4$ (fourth lens holding surface) in order from a light incidence side thereof.
As for the plano-convex lens 1, a surface on a light incidence side thereof is convex and a surface on a light emission side thereof is flat, and the plano-convex lens 1 has positive refracting power.
Further, the plano-convex lens 1 has a flat end facet 1a on the surface on the light emission side thereof, and is held in a state in which the end facet 1a is pressed against the lens holding surface $10_1$.
Both surfaces of the biconcave lens 2 are concave, and the biconcave lens 2 has negative refracting power.
Further, the biconcave lens 2 has a flat end facet 2a on a surface on a light emission side thereof, and is held in a state in which the end facet 2a is pressed against the lens holding surface $10_2$.
As for the meniscus lens 3, a surface on a light incidence side thereof is convex and a surface on a light emission side thereof is concave, and the meniscus lens 3 has negative refracting power.
Further, the meniscus lens 3 has a flat end facet 3a on the surface on the light emission side thereof, and is held in a state in which the end facet 3a is pressed against the lens holding surface $10_3$.
As for the plano-convex lens 4, a surface on a light incidence side thereof is flat and a surface on a light emission side thereof is convex, and the plano-convex lens 4 has positive refracting power.
Further, the plano-convex lens 4 has a flat end facet 4a on the surface on the light incidence side thereof, and is held in a state in which the end facet 4a is pressed against the lens holding surface $10_4$.
An aperture 20 is disposed between the biconcave lens 2 and the meniscus lens 3.
Only one of the surfaces of each of the plano-convex lenses 1 and 4, the one being not flat, should just be ground at the time that it is manufactured, because the other surface is flat. Therefore, the manufacturing cost of each of the plano-convex lenses 1 and 4 is lower than those of, for example, the biconcave lens 2 and the meniscus lens 3 because of grinding.

$R_1$ denotes the radius of curvature of the light incidence surface of the plano-convex lens 1, and $R_2$ denotes the radius of curvature of the light emission surface of the plano-convex lens 1.

$R_3$ denotes the radius of curvature of the light incidence surface of the biconcave lens 2, and $R_4$ denotes the radius of curvature of the light emission surface of the biconcave lens 2.

$R_5$ denotes the radius of curvature of the aperture 20.

$R_6$ denotes the radius of curvature of the light incidence surface of the meniscus lens 3, and $R_7$ denotes the radius of curvature of the light emission surface of the meniscus lens 3.

$R_8$ denotes the radius of curvature of the light incidence surface of the plano-convex lens 4, and $R_9$ denotes the radius of curvature of the light emission surface of the plano-convex lens 4.

$D_1$ denotes the spacing on an optical axis X between the light incidence surface and the light emission surface of the plano-convex lens 1, and $D_2$ denotes the spacing on the optical axis X between the light emission surface of the plano-convex lens 1 and the light incidence surface of the biconcave lens 2.

$D_3$ denotes the spacing on the optical axis X between the light incidence surface and the light emission surface of the biconcave lens 2, $D_4$ denotes the spacing on the optical axis X between the light emission surface of the biconcave lens 2 and the aperture 20, and $D_5$ denotes the spacing on the optical axis X between the aperture 20 and the light incidence surface of the meniscus lens 3.

$D_6$ denotes the spacing on the optical axis X between the light incidence surface and the light emission surface of the meniscus lens 3, and $D_7$ denotes the spacing on the optical axis X between the light emission surface of the meniscus lens 3 and the light incidence surface of the plano-convex lens 4.

$D_8$ denotes the spacing on the optical axis X between the light incidence surface and the light emission surface of the plano-convex lens 4, and $D_9$ denotes the spacing on the optical axis X between the light emission surface of the plano-convex lens 4 and a position P on an image surface $S_i$ where an image is formed.

Here, it is assumed that the focal length of the whole of the lens barrel is denoted by f, the focal length of the plano-convex lens 1 is denoted by $f_1$, the focal length of the biconcave lens 2 is denoted by $f_2$, the focal length of the meniscus lens 3 is denoted by $f_3$, and the focal length of the plano-convex lens 4 is denoted by $f_4$. Further, it is assumed that the radius of curvature of the image surface $S_i$ where light is imaged by the lens barrel is denoted by $R_i$.

In Embodiments 1 to 3 including the Embodiment 1, by causing the following condition (1) to be satisfied, the degradation in the performance of the wavefront aberration for the rotation tolerance of the whole of the lens barrel is reduced.

$$-2.36 \leq \frac{R_i}{f} \leq -2.14 \qquad (1)$$

Further, in Embodiments 1 to 3 including the Embodiment 1, by causing the following conditions (2) to (5) to be satisfied, high performance of the wavefront aberration is provided and the erection tolerance of the lens barrel is reduced.

$$0.71 \leq \frac{f}{f_1} \leq 0.82 \qquad (2)$$

$$-1.18 \leq \frac{f}{f_2} \leq -0.96 \qquad (3)$$

$$-2.55 \leq \frac{f}{f_3} \leq -1.01 \qquad (4)$$

$$0.71 \leq \frac{f}{f_4} \leq 0.82 \qquad (5)$$

Next, operations will be explained.

A light flux from an object side which is a light incidence side is incident on the lens barrel along the optical axis X.

The light flux incident on the lens barrel passes through the plano-convex lens 1, the biconcave lens 2, the meniscus lens 3, and the plano-convex lens 4, so that the light flux is imaged at the image formation position P on the image surface $S_i$.

Fig. 3 is a table diagram showing an example of lens barrel specifications, such as the radii of curvature of the surfaces of the plano-convex lens 1, the biconcave lens 2, the meniscus lens 3, and the plano-convex lens 4, and the radius of curvature of the image surface $S_i$.

In Fig. 3, $\infty$ shows that the radius of curvature is infinite. $n_1$ denotes the index of refraction of the plano-convex lens 1, $n_3$ denotes the index of refraction of the biconcave lens 2, $n_6$ denotes the index of refraction of the meniscus lens 3, and $n_8$ denotes the index of refraction of the plano-convex lens 4.

In the Embodiment 1, the radii of curvature $R_1$ to $R_9$, and $R_i$, the spacings $D_1$ to $D_9$, the indices of refraction $n_1$, $n_3$, $n_6$, and $n_8$, the focal length f of the whole of the lens barrel, an F number Fno, and a half angle of view $\omega$ have numerical values shown in Fig. 3.

Using these numerical values, $R_i/f=-2.14$ is provided as shown in Fig. 3, and the condition (1) is satisfied.

Further, $f/f_1=0.82$, $f/f_2=-0.96$, $f/f_3=-2.55$, and $f/f_4=0.82$ are provided, and the conditions (2) to (5) are satisfied.

In the example of Fig. 3, as to the radii of curvature, their values on the light incidence side are positive.

When a simulation of the wavefront aberration of the lens barrel expressed by the above-mentioned numerical values is performed, RMS which is the mean square of the wavefront aberration is provided as follows. $\lambda$ denotes a wavelength of 1.55um.

$$RMS=0.0175\lambda \qquad (6)$$

Although the equation (6) shows a case in which the half angle of view $\omega$ is 10 degrees, in a case in which the half angle of view w is 0 degrees, RMS which is the mean square of the wavefront aberration is provided as follows.

$$RMS=0.0149\lambda \qquad (7)$$

Not only in the case in which the half angle of view $\omega$ is 0 degrees, but also in the case in which the half angle of view $\omega$ is 10 degrees, the wavefront aberration satisfies the wavefront aberration required for a wind measurement lidar.

Incidentally, because RMS of the wavefront aberration required for a wind measurement lidar is typically of the order of $0.1\lambda$ or less, the requirement is fully satisfied.

As is clear from the above description, according to the Embodiment 1, because the light emission surface of the plano-convex lens 1 which is the first lens and the light incidence surface of the plano-convex lens 4 which is the fourth lens are flat, the manufacturing costs of the first and fourth lenses are reduced to less than those in a case of using, for example, a biconvex lens, a meniscus lens, or the like as each of the first and fourth lenses. Therefore, there is provided an advantage of providing a low-cost lens barrel that can satisfy the wavefront aberration required for a wind measurement lidar.

Further, according to the Embodiment 1, because the plano-convex lens 1 is held in the state in which the flat end facet 1a is pressed against the flat lens holding surface $10_1$, the biconcave lens 2 is held in the state in which the flat end facet 2a is pressed against the flat lens holding surface $10_2$, the meniscus lens 3 is held in the state in which the flat end facet 3a is pressed against the flat lens holding surface $10_3$, and the plano-convex lens 4 is held in the state in which the flat end facet 4a is pressed against the flat lens holding surface $10_1$, the tolerance at the time of assembly can be reduced and the degradation in the performance of the wavefront aberration can be suppressed.

In the Embodiment 1, because the radius of curvature $R_1$ of the plano-convex lens 1 and the radius of curvature $R_9$ of the plano-convex lens 4 are identical, and the index of refraction $n_1$ of the plano-convex lens 1 and the index of refraction $n_8$ of the plano-convex lens 4 are identical, as shown in Fig. 3, it is possible to process the plano-convex lenses 1 and 4 in the same manufacturing process, and it is possible to achieve a cost reduction.

Because the orientations of the plano-convex lens 1 and the plano-convex lens 4 are opposite to each other, the radius of curvature $R_1$ of the plano-convex lens 1 and the radius of curvature $R_9$ of the plano-convex lens 4 have opposite signs, i.e., $R_1=89.609$ and $R_9=-89.609$, as shown in Fig. 3, but the radii of curvature of the lenses themselves are identical.

In the Embodiment 1, because the radius of curvature $R_i$ of the image surface $S_i$ where light is imaged by the lens barrel has a negative radius of curvature for the focal length f of the whole of the lens barrel, the degradation in the performance of the wavefront aberration for the rotation tolerance of the whole of the lens barrel can be reduced to less than that of a case in which the image surface $S_i$ where light is imaged by the lens barrel is flat.

Incidentally, in a case of a normal camera lens, because the light receiving surface is flat, the light receiving surface and the image surface do not match each other if the image surface has a radius of curvature. As a result, blurring occurs in the image in accordance with the angle of view.

In a case in which the lens barrel is used as an optical antenna of a wind measurement lidar, an optical fiber is typically used for input and output of laser light to and from the lens barrel. Therefore, at the position of an end of the fiber, the position being on the image surface, the angle of view is specified as a point instead of a surface. Therefore, because even in a case in which the image surface has a radius of curvature, the fiber end should just be arranged on the image surface having this radius of curvature, blurring like that occurring in the case of a camera lens does not occur.

Further, when the whole image is captured with a high degree of resolution by a camera, the performance of the wavefront aberration which determines the image formation performance need be maintained in all the angles of view falling within a certain angle-of-view range determined by both the size of the light receiving surface and the focal length.

In the case in which the lens barrel is used as an optical antenna of a wind measurement lidar, because the angle of view is determined by the position on the image surface of the fiber end, the angle of view at which the performance of the wavefront aberration should be maintained does not fall within such a wide range as that in the case of a camera lens, but is a specific one. Therefore, because it is only required to improve the performance of the wavefront aberration for a specific angle of view, the constraints are eased, and, as a result, high performance of the wavefront aberration can be provided.

In a wind measurement lidar that measures a wind direction and a wind velocity in the atmosphere by transmitting and receiving laser light, a wind velocity in a line-of-sight direction is measured by using the Doppler effect, and a wind direction is calculated from wind velocities in multiple line-of-sight directions. Therefore, fiber ends are arranged for multiple angles of view, laser light is transmitted and received at each of the fiber ends corresponding to the multiple angles of view, and a wind velocity at each of the angles of view is calculated.

In the Embodiment 1, a wavefront aberration in the case in which the half angle of view $\omega$ is 0 degrees and a wavefront aberration in the case in which the half angle of view $\omega$ is 10 degrees are measured, and either of the wavefront aberrations satisfies the wavefront aberration required for the wind measurement lidar.

Although in the Embodiment 1, the example in which the index of refraction $n_1$ of the plano-convex lens 1 and the index of refraction $n_8$ of the plano-convex lens 4 are identical as shown in Fig. 3 is shown, the plano-convex lens 1 and the plano-convex lens 4 can be manufactured using glass materials causing the refractive index difference $\Delta n_{1-8}$ between the plano-convex lens 1 and the plano-convex lens 4 to fall within a range of $\pm 0.0006$.

$$-0.0006 < \Delta n_{1-8} < 0.0006 \qquad (8)$$

Further, although the example in which the index of refraction $n_3$ of the biconcave lens 2 and the index of refraction $n_6$ of the meniscus lens 3 are identical is shown, the biconcave lens 2 and the meniscus lens 3 can be manufactured using glass materials causing the refractive index difference $\Delta n_{3-6}$ between the biconcave lens 2 and the meniscus lens 3 to fall within a range of $\pm 0.0006$.

$$-0.0006 < \Delta n_{3-6} < 0.0006 \qquad (9)$$

In the case in which the refractive index difference falls within the range of $\pm 0.0006$, a wavefront aberration which is identical to the wavefront aberration shown by the equation (6) or (7) is provided, and can satisfy the wavefront aberration required for a wind measurement lidar. Therefore, even though a variation in the index of refraction occurs within the range of $\pm 0.0006$ due to manufacturing tolerances or the like, the identical wavefront aberration is maintained.

Although in the Embodiment 1, the example in which the radius of curvature $R_1$ of the light incidence surface of the plano-convex lens 1 and the radius of curvature $R_9$ of the light emission surface of the plano-convex lens 4 are identical is shown, the radius of curvature $R_1$ and the radius of curvature $R_9$ can differ from each other as long as the difference $\Delta R_{1-9}$ between the radius of curvature $R_1$ and the radius of curvature $R_9$ falls within a range of $\pm 0.47$mm.

$$-0.47 < \Delta R_{1-9} < 0.47 \qquad (10)$$

In the case in which the difference $\Delta R_{1-9}$ between the radius of curvature $R_1$ and the radius of curvature $R_9$ falls within the range of $\pm 0.47$mm, a wavefront aberration which is identical to the wavefront aberration shown by the equation (6) or (7) is provided, and can satisfy the wavefront aberration required for a wind measurement lidar. Therefore, even though a variation in the radius of curvature occurs within the range of $\pm 0.47$mm due to manufacturing tolerances or the like, the identical wavefront aberration is maintained.

In the Embodiment 1, the example in which the light emission surface of the plano-convex lens 1 and the light

6

incidence surface of the plano-convex lens 4 are flat is shown. More specifically, in Fig. 3, the example in which the radius of curvature $R_2$ of the light emission surface of the plano-convex lens 1 and the radius of curvature $R_8$ of the light incidence surface of the plano-convex lens 4 are infinite is shown. However, the radii of curvature $R_2$ and $R_8$ should just be larger than 17,000mm or smaller than -17,000mm, and are not limited to infinity.

$$R_2 > 17,000 \text{ or } R_2 < -17,000 \qquad (11)$$

$$R_8 > 17,000 \text{ or } R_8 < -17,000 \qquad (12)$$

Even though the radii of curvature $R_2$ and $R_8$ are not infinite, such as in the case in which the radii of curvature $R_2$ and $R_8$ are larger than 17,000mm or smaller than -17,000mm, a wavefront aberration which is identical to the wavefront aberration shown by the equation (6) or (7) is provided, and can satisfy the wavefront aberration required for a wind measurement lidar. Therefore, even in the case in which the radii of curvature $R_2$ and $R_8$ are larger than 17,000mm or smaller than -17,000mm due to manufacturing tolerances or the like, the identical wavefront aberration is maintained.

Embodiment 2.

Although in Embodiment 1, the example in which the second lens is the biconcave lens 2 in which both the surfaces thereof are concave is shown, in the Embodiment 2, an example in which a second lens is a plano-concave lens in which a surface on a light incidence side thereof is concave and a surface on a light emission side thereof is flat will be explained.

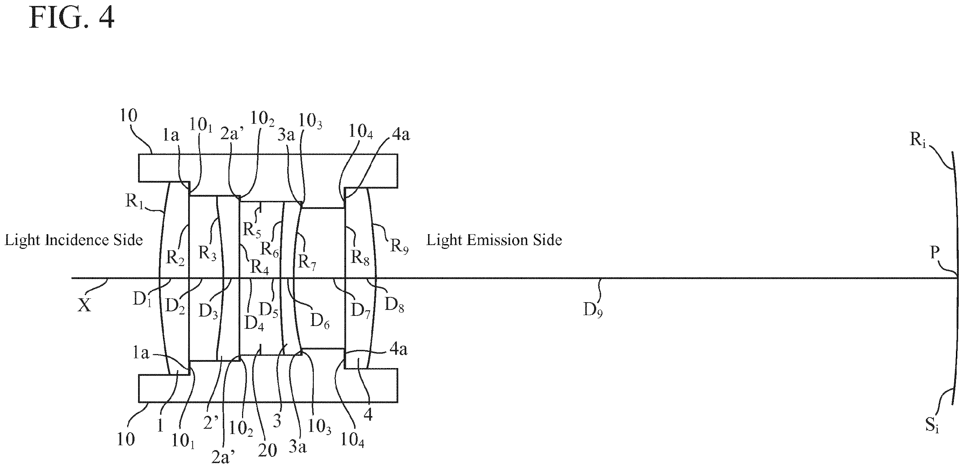

Fig. 4 is a schematic diagram showing a lens barrel according to Embodiment 2 of the present invention, and, in Fig. 4, because the same reference sings as those shown in Fig. 1 denote the same components or like components, an explanation of the components will be omitted hereafter.

In a plano-concave lens 2' which is the second lens, the surface on the light incidence side thereof is concave and the surface on the light emission side thereof is flat, and the plano-concave lens 2' has negative refracting power.

Further, the plano-concave lens 2' has a flat end facet 2a' on the surface on the light emission side thereof, and is held in a state in which the end facet 2a' is pressed against a lens holding surface $10_2$.

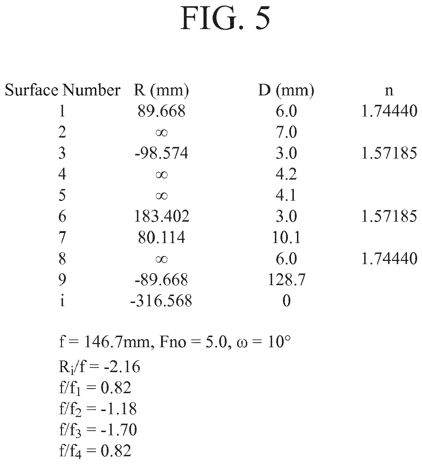

Fig. 5 is a table diagram showing an example of lens barrel specifications, such as the radii of curvature of the surfaces of a plano-convex lens 1, the plano-concave lens 2', a meniscus lens 3, and a plano-convex lens 4, and the radius of curvature of an image surface $S_i$.

In Fig. 5, $\infty$ shows that the radius of curvature is infinite. $n_1$ denotes the index of refraction of the plano-convex lens 1, $n_3$ denotes the index of refraction of the plano-concave lens 2', $n_6$ denotes the index of refraction of the meniscus lens 3, and $n_8$ denotes the index of refraction of the plano-convex lens 4.

In the Embodiment 2, the radii of curvature $R_1$ to $R_9$, and $R_i$, spacings $D_1$ to $D_9$, the indices of refraction $n_1$, $n_3$, $n_6$, and $n_8$, the focal length f of the whole of the lens barrel, an F number Fno, and a half angle of view w have numerical values shown in Fig. 5.

Using these numerical values, $R_i/f = -2.16$ is provided as shown in Fig. 5, and the above-mentioned condition (1) is satisfied.

Further, $f/f_1 = 0.82$, $f/f_2 = -1.18$, $f/f_3 = -1.70$, and $f/f_4 = 0.82$ are provided, and the above-mentioned conditions (2) to (5) are satisfied.

When a simulation of the wavefront aberration of the lens barrel expressed by the above-mentioned numerical values is performed, RMS which is the mean square of the wavefront aberration is provided as follows. $\lambda$ denotes a wavelength of 1.55um.

$$RMS = 0.0218\lambda \qquad (13)$$

Although the equation (13) shows a case in which the half angle of view $\omega$ is 10 degrees, in a case in which the half angle of view $\omega$ is 0 degrees, RMS which is the mean square of the wavefront aberration is provided as follows.

$$RMS = 0.0136\lambda \qquad (14)$$

Not only in the case in which the half angle of view $\omega$ is 0 degrees, but also in the case in which the half angle of view $\omega$ is 10 degrees, the wavefront aberration satisfies the wavefront aberration required for a wind measurement lidar, like in the case of above-mentioned Embodiment 1.

Although in the case in which the half angle of view ω is 10 degrees, RMS of the wavefront aberration is slightly greater than that in above-mentioned Embodiment 1, the wavefront aberration in the Embodiment 2 is sufficiently allowable because RMS of the wavefront aberration required for a wind measurement lidar is typically of the order of 0.1λ or less.

In the case in which the half angle of view ω is 0 degrees, RMS of the wavefront aberration is slightly less than that in above-mentioned Embodiment 1.

As is clear from the above description, according to the Embodiment 2, because the light emission surface of the plano-convex lens 1 which is the first lens, the light emission surface of the plano-concave lens 2' which is the second lens, and the light incidence surface of the plano-convex lens 4 which is the fourth lens are flat, the manufacturing costs of the first, second, and fourth lenses are reduced to less than those in a case of using, for example, a biconvex lens, a meniscus lens, or the like as each of the first, second, and fourth lenses. Therefore, there is provided an advantage of providing a low-cost lens barrel that can satisfy the wavefront aberration required for a wind measurement lidar, like in the case of above-mentioned Embodiment 1.

In addition, in the Embodiment 2, because the plano-concave lens 2' in which one of the surfaces thereof is flat is also used as the second lens, a lens barrel at a lower cost than that of above-mentioned Embodiment 1 is provided.

In the Embodiment 2, the example in which the light emission surface of the plano-convex lens 1, the light emission surface of the plano-concave lens 2', and the light incidence surface of the plano-convex lens 4 are flat is shown. More specifically, in Fig. 5, the example in which the radius of curvature $R_2$ of the light emission surface of the plano-convex lens 1, the radius of curvature $R_4$ of the light emission surface of the plano-concave lens 2', and the radius of curvature $R_8$ of the light incidence surface of the plano-convex lens 4 are infinite is shown. However, the radii of curvature $R_2$, $R_4$, and $R_8$ should just be larger than 17, 000mm or smaller than -17, 000mm, and are not limited to infinity.

$$R_2 > 17,000 \text{ or } R_2 < -17,000 \qquad (15)$$

$$R_4 > 17,000 \text{ or } R_4 < -17,000 \qquad (16)$$

$$R_8 > 17,000 \text{ or } R_8 < -17,000 \qquad (17)$$

Even though the radii of curvature $R_2$, $R_4$, and $R_8$ are not infinite, such as in the case in which the radii of curvature $R_2$, $R_4$, and $R_8$ are larger than 17, 000mm or smaller than -17, 000mm, a wavefront aberration which is identical to the wavefront aberration shown by the equation (13) or (14) is provided, and can satisfy the wavefront aberration required for a wind measurement lidar. Therefore, even in the case in which the radii of curvature $R_2$, $R_4$, and $R_8$ are larger than 17,000mm or smaller than -17,000mm due to manufacturing tolerances or the like, the identical wavefront aberration is maintained.

Embodiment 3.

Although in the Embodiments 1 and 2, the example in which the third lens is the meniscus lens 3 in which the surface on the light incidence side thereof is convex and the surface on the light emission side thereof is concave is shown, in the Embodiment 3, an example in which a third lens is a plano-concave lens in which a surface on a light incidence side thereof is flat and a surface on a light emission side thereof is concave will be explained.

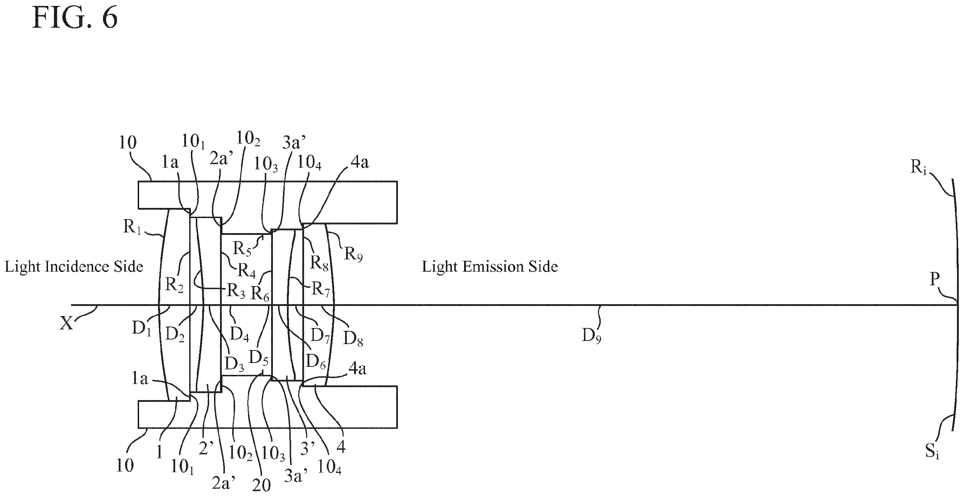

Fig. 6 is a schematic diagram showing a lens barrel according to the Embodiment 3 of the present invention, and, in Fig. 6, because the same reference signs as those shown in Fig. 4 denote the same components or like components, an explanation of the components will be omitted hereafter.

In a plano-concave lens 3' which is the third lens, the surface on the light incidence side thereof is flat and the surface on the light emission side thereof is concave, and the plano-concave lens 3' has negative refracting power.

Further, the plano-concave lens 3' has a flat end facet 3a' on the surface on the light incidence side thereof, and is held in a state in which the end facet 3a' is pressed against a lens holding surface $10_3$.

Although in Fig. 6, the example in which the plano-concave lens 3' which is the third lens is used in the lens barrel of Fig. 4 in which the plano-concave lens 2' is mounted is shown, the plano-concave lens 3' can be used in the lens barrel of Fig. 1 in which the biconcave lens 2 is mounted.

In the example of Fig. 6, because the end facet 3a' of the plano-concave lens 3' is on the surface of the light incidence side, the shape of the barrel 10 on the lens holding surface $10_3$ differs from those of the barrels 10 of Figs. 1 and 4.

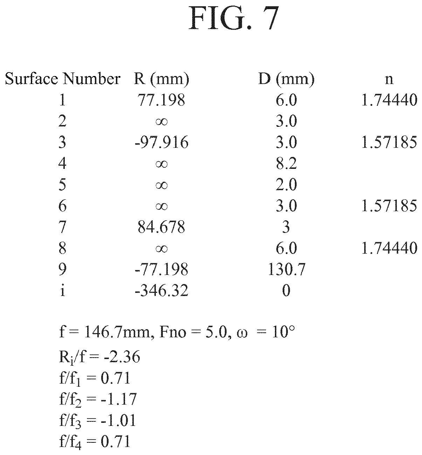

Fig. 7 is a table diagram showing an example of lens barrel specifications, such as the radii of curvature of the surfaces of a plano-convex lens 1, the plano-concave lens 2', the plano-concave lens 3', and a plano-convex lens 4, and the radius of curvature of an image surface $S_i$.

In Fig. 7, $\infty$ shows that the radius of curvature is infinite. $n_1$ denotes the index of refraction of the plano-convex lens 1, $n_3$ denotes the index of refraction of the plano-concave lens 2' , $n_6$ denotes the index of refraction of the plano-concave lens 3', and $n_8$ denotes the index of refraction of the plano-convex lens 4.

In the Embodiment 3, the radii of curvature $R_1$ to $R_9$, and $R_i$, spacings $D_1$ to $D_9$, the indices of refraction $n_1$, $n_3$, $n_6$, and $n_8$, the focal length f of the whole of the lens barrel, an F number Fno, and a half angle of view w have numerical values shown in Fig. 7.

Using these numerical values, $R_i/f$=-2.36 is provided as shown in Fig. 7, and the above-mentioned condition (1) is satisfied.

Further, $f/f_1$=0.71, $f/f_2$=-1.17, $f/f_3$=-1.01, and $f/f_4$=0.71 are provided, and the above-mentioned conditions (2) to (5) are satisfied.

When a simulation of the wavefront aberration of the lens barrel expressed by the above-mentioned numerical values is performed, RMS which is the mean square of the wavefront aberration is provided as follows. $\lambda$ denotes a wavelength of 1.55um.

$$RMS=0.0345\lambda \qquad (18)$$

Although the equation (18) shows a case in which the half angle of view $\omega$ is 10 degrees, in a case in which the half angle of view w is 0 degrees, RMS which is the mean square of the wavefront aberration is provided as follows.

$$RMS=0.0107\lambda \qquad (19)$$

Not only in the case in which the half angle of view $\omega$ is 0 degrees, but also in the case in which the half angle of view $\omega$ is 10 degrees, the wavefront aberration satisfies the wavefront aberration required for a wind measurement lidar, like in the case of above-mentioned Embodiment 1.

Although in the case in which the half angle of view $\omega$ is 10 degrees, RMS of the wavefront aberration is slightly greater than those in above-mentioned Embodiments 1 and 2, the wavefront aberration in the Embodiment 3 is sufficiently allowable because RMS of the wavefront aberration required for a wind measurement lidar is typically of the order of $0.1\lambda$ or less.

In the case in which the half angle of view $\omega$ is 0 degrees, RMS of the wavefront aberration is slightly less than those in above-mentioned Embodiments 1 and 2.

As is clear from the above description, according to the Embodiment 3, because the light emission surface of the plano-convex lens 1 which is the first lens, the light emission surface of the plano-concave lens 2' which is the second lens, the light incidence surface of the plano-concave lens 3' which is the third lens, and the light incidence surface of the plano-convex lens 4 which is the fourth lens are flat, the manufacturing costs of the first through fourth lenses are reduced to less than those in a case of using, for example, a biconvex lens, a meniscus lens, or the like as each of the first through fourth lenses. Therefore, there is provided an advantage of providing a low-cost lens barrel that can satisfy the wavefront aberration required for a wind measurement lidar, like in the case of above-mentioned Embodiments 1 and 2.

In addition, in the Embodiment 3, because the plano-concave lens 3' in which one of the surfaces thereof is flat is also used as the third lens, a lens barrel at a lower cost than those of above-mentioned Embodiments 1 and 2 is provided.

In the Embodiment 3, the example in which the light emission surface of the plano-convex lens 1, the light emission surface of the plano-concave lens 2', the light incidence surface of the plano-concave lens 3', and the light incidence surface of the plano-convex lens 4 are flat is shown. More specifically, in Fig. 7, the example in which the radius of curvature $R_2$ of the light emission surface of the plano-convex lens 1, the radius of curvature $R_4$ of the light emission surface of the plano-concave lens 2', the radius of curvature $R_6$ of the light incidence surface of the plano-concave lens 3', and the radius of curvature $R_8$ of the light incidence surface of the plano-convex lens 4 are infinite is shown. However, the radii of curvature $R_2$, $R_4$, $R_6$, and $R_8$ should just be larger than 17,000mm or smaller than -17,000mm, and are not limited to infinity.

$$R_2>17,000 \text{ or } R_2<-17,000 \qquad (20)$$

$$R_4>17,000 \text{ or } R_4<-17,000 \qquad (21)$$

$$R_6 > 17,000 \text{ or } R_6 < -17,000 \qquad (22)$$

$$R_8 > 17,000 \text{ or } R_8 < -17,000 \qquad (23)$$

Even though the radii of curvature $R_2$, $R_4$, $R_6$, and $R_8$ are not infinite, such as in the case in which the radii of curvature $R_2$, $R_4$, $R_6$, and $R_8$ are larger than 17,000mm or smaller than -17,000mm, a wavefront aberration which is identical to the wavefront aberration shown by the equation (18) or (19) is provided, and can satisfy the wavefront aberration required for a wind measurement lidar. Therefore, even in the case in which the radii of curvature $R_2$, $R_4$, $R_6$, and $R_8$ are larger than 17, 000mm or smaller than -17,000mm due to manufacturing tolerances or the like, the identical wavefront aberration is maintained.

It is to be understood that any combination of two or more of the above-mentioned embodiments can be made, various changes can be made in any component according to any one of the above-mentioned embodiments, and any component according to any one of the above-mentioned embodiments can be omitted within the scope of the invention as defined by the following claims.

INDUSTRIAL APPLICABILITY

The present invention is suitable for a lens barrel that images incident light onto an image surface.

REFERENCE SIGNS LIST

1 plano-convex lens (first lens), 1a flat end facet, 2 biconcave lens (second lens), 2a flat end facet, 2' plano-concave lens (second lens), 2a' flat end facet, 3 meniscus lens (third lens), 3a flat end facet, 3' plano-concave lens (third lens), 3a' flat end facet, 4 plano-convex lens (fourth lens), 4a flat end facet, 10 barrel, $10_1$ lens holding surface (first lens holding surface), $10_2$ lens holding surface (second lens holding surface), $10_3$ lens holding surface (third lens holding surface), $10_4$ lens holding surface (fourth lens holding surface), and 20 aperture.

**Claims**

1.  A lens barrel comprising:

    a first lens (1) in which a surface on a light incidence side thereof is convex and a surface on a light emission side thereof is flat;
    a second lens (2) having negative refracting power on which light emitting from the first lens (1) is incident;
    a third lens (3) having negative refracting power on which light emitting from the second lens (2) is incident;
    a fourth lens (4) in which a surface on a light incidence side thereof is flat and a surface on a light emission side thereof is convex, and on which light emitting from the third lens (3) is incident; and
    a barrel (10) for holding the first through fourth lenses,
    wherein a result of dividing a radius of curvature (Ri) of an image surface (Si) where light is imaged at an image formation position (P) on the image surface (Si) by a light flux from an object side incident on the lens barrel passing through the first through fourth lenses by a focal length (f) of a whole of the lens barrel comprised of the first through fourth lenses, ranges from -2.36 to -2.14,
    the radius of curvature (Ri) being determined at the image formation position (P) which is located on an optical axis of the whole of the lens barrel.

2.  The lens barrel according to claim 1, wherein a result of dividing the focal length of the whole of the lens barrel by a focal length of the first lens (1) ranges from 0.71 to 0.82, a result of dividing the focal length of the whole of the lens barrel by a focal length of the second lens (2) ranges from -1.18 to -0.96, a result of dividing the focal length of the whole of the barrel (10) by a focal length of the third lens (3) ranges from -2.55 to -1.01, and a result of dividing the focal length of the whole of the lens barrel by a focal length of the fourth lens (4) ranges from 0.71 to 0.82.

**Patentansprüche**

1.  Objektivtubus, umfassend:

eine erste Linse (1), bei der eine Oberfläche auf einer Lichteinfallsseite davon konvex und eine Oberfläche auf einer Lichtemissionsseite davon flach ist;

eine zweite Linse (2) mit negativer Brechkraft, auf die von der ersten Linse (1) emittiertes Licht einfällt

eine dritte Linse (3) mit negativer Brechkraft, auf die das von der zweiten Linse (2) emittierte Licht einfällt

eine vierte Linse (4), bei der eine Oberfläche auf einer Lichteinfallsseite davon flach ist und eine Oberfläche auf einer Lichtemissionsseite davon konvex ist, und auf die von der dritten Linse (3) emittiertes Licht einfällt; und

einen Tubus (10) zum Halten der ersten bis vierten Linse, wobei ein Ergebnis des Dividierens eines Krümmungsradius (Ri) einer Bildfläche (Si), auf der Licht an einer Bilderzeugungsposition (P) auf der Bildfläche (Si) abgebildet wird, durch einen Lichtfluss von einer Objektseite, der auf den Objektivtubus einfällt und durch die erste bis vierte Linse hindurchgeht, durch eine Brennweite (f) des gesamten Objektivtubus, der die erste bis vierte Linse umfasst, im Bereich von -2,36 bis -2,14 liegt, wobei der Krümmungsradius (Ri) an der Bilderzeugungsposition (P) bestimmt wird, die sich auf einer optischen Achse des gesamten Objektivtubus befindet.

**2.** Objektivtubus nach Anspruch 1, wobei ein Ergebnis des Dividierens der Brennweite des gesamten Objektivtubus durch eine Brennweite der ersten Linse (1) von 0,71 bis 0,82 reicht, ein Ergebnis des Dividierens der Brennweite des gesamten Objektivtubus durch eine Brennweite der zweiten Linse (2) von -1,18 bis -0,96 reicht, ein Ergebnis des Dividierens der Brennweite des gesamten Tubus (10) durch eine Brennweite der dritten Linse (3) von -2,55 bis -1,01 reicht, und ein Ergebnis des Dividierens der Brennweite des gesamten Objektivtubus durch eine Brennweite der vierten Linse (4) von 0,71 bis 0,82 reicht.

**Revendications**

**1.** Barillet d'objectif comprenant :

une première lentille (1) dans laquelle une surface sur un côté d'incidence de lumière de celle-ci est convexe et une surface sur un côté d'émission de lumière de celle-ci est plate ;

une deuxième lentille (2) ayant une puissance de réfraction négative sur laquelle une lumière émise en provenance de la première lentille (1) est incidente ;

une troisième lentille (3) ayant une puissance de réfraction négative sur laquelle une lumière émise en provenance de la deuxième lentille (2) est incidente ;

une quatrième lentille (4) dans laquelle une surface sur un côté d'incidence de lumière de celle-ci est plate et une surface sur un côté d'émission de lumière de celle-ci est convexe, et sur laquelle une lumière émise en provenance de la troisième lentille (3) est incidente ; et

un barillet (10) pour contenir les première à quatrième lentilles,

dans lequel un résultat de division d'un rayon de courbure (Ri) d'une surface d'image (Si), où une lumière est imagée à une position de formation d'image (P) sur la surface d'image (Si) par un flux de lumière provenant d'un côté objet incident sur le barillet d'objectif traversant les première à quatrième lentilles, par une longueur focale (f) du barillet d'objectif dans son ensemble composé des première à quatrième lentilles, varie de -2,36 à -2,14,

le rayon de courbure (Ri) étant déterminé à la position de formation d'image (P) qui est située sur un axe optique du barillet d'objectif dans son ensemble.

**2.** Barillet d'objectif selon la revendication 1, dans lequel un résultat de division de la longueur focale du barillet d'objectif dans son ensemble par une longueur focale de la première lentille (1) varie de 0,71 à 0,82, un résultat de division de la longueur focale du barillet d'objectif dans son ensemble par une longueur focale de la deuxième lentille (2) varie de -1,18 à -0,96, un résultat de division de la longueur focale du barillet (10) dans son ensemble par une longueur focale de la troisième lentille (3) varie de -2,55 à -1,01, et un résultat de division de la longueur focale du barillet d'objectif dans son ensemble par une longueur focale de la quatrième lentille (4) varie de 0,71 à 0,82.

FIG. 1

Light Incidence Side

Light Emission Side

EP 3 474 056 B1

# FIG. 2

# FIG. 3

| Surface Number | R (mm) | D (mm) | n |
|---|---|---|---|
| 1 | 89.609 | 6.0 | 1.74440 |
| 2 | ∞ | 7.0 | |
| 3 | -99.814 | 3.0 | 1.57185 |
| 4 | 409.355 | 6.1 | |
| 5 | ∞ | 6.3 | |
| 6 | 120.819 | 3.0 | 1.57185 |
| 7 | 77.241 | 4.5 | |
| 8 | ∞ | 6.0 | 1.74440 |
| 9 | -89.609 | 128.7 | |
| i | -314.437 | 0 | |

f = 146.7mm, Fno = 5.0, ω = 10°

$R_i/f = -2.14$

$f/f_1 = 0.82$

$f/f_2 = -0.96$

$f/f_3 = -2.55$

$f/f_4 = 0.82$

FIG. 4

# FIG. 5

| Surface Number | R (mm) | D (mm) | n |
|---|---|---|---|
| 1 | 89.668 | 6.0 | 1.74440 |
| 2 | ∞ | 7.0 | |
| 3 | -98.574 | 3.0 | 1.57185 |
| 4 | ∞ | 4.2 | |
| 5 | ∞ | 4.1 | |
| 6 | 183.402 | 3.0 | 1.57185 |
| 7 | 80.114 | 10.1 | |
| 8 | ∞ | 6.0 | 1.74440 |
| 9 | -89.668 | 128.7 | |
| i | -316.568 | 0 | |

f = 146.7mm, Fno = 5.0, ω = 10°

$R_i/f = -2.16$

$f/f_1 = 0.82$

$f/f_2 = -1.18$

$f/f_3 = -1.70$

$f/f_4 = 0.82$

FIG. 6

Light Incidence Side

Light Emission Side

# FIG. 7

| Surface Number | R (mm) | D (mm) | n |
|:---:|:---:|:---:|:---:|
| 1 | 77.198 | 6.0 | 1.74440 |
| 2 | $\infty$ | 3.0 | |
| 3 | -97.916 | 3.0 | 1.57185 |
| 4 | $\infty$ | 8.2 | |
| 5 | $\infty$ | 2.0 | |
| 6 | $\infty$ | 3.0 | 1.57185 |
| 7 | 84.678 | 3 | |
| 8 | $\infty$ | 6.0 | 1.74440 |
| 9 | -77.198 | 130.7 | |
| i | -346.32 | 0 | |

$f = 146.7\text{mm}$, $Fno = 5.0$, $\omega = 10°$

$R_i/f = -2.36$

$f/f_1 = 0.71$

$f/f_2 = -1.17$

$f/f_3 = -1.01$

$f/f_4 = 0.71$

**EP 3 474 056 B1**

**REFERENCES CITED IN THE DESCRIPTION**

**Patent documents cited in the description**

- JP 2014077904 A

- JP 2013025202 A